(19) Europäisches Patentamt
European Patent Office
Office européen des brevets

(11) Veröffentlichungsnummer: **0 483 553 B1**

(12) **EUROPÄISCHE PATENTSCHRIFT**

(45) Veröffentlichungstag der Patentschrift: **27.12.95**

(51) Int. Cl.⁶: **C08F 10/10**

(21) Anmeldenummer: **91117088.4**

(22) Anmeldetag: **08.10.91**

(54) **Verfahren zur Herstellung von Polyisobuten**

(30) Priorität: **19.10.90 DE 4033196**

(43) Veröffentlichungstag der Anmeldung:
**06.05.92 Patentblatt 92/19**

(45) Bekanntmachung des Hinweises auf die
Patenterteilung:
**27.12.95 Patentblatt 95/52**

(84) Benannte Vertragsstaaten:
**BE DE ES FR GB IT NL**

(56) Entgegenhaltungen:
**EP-A- 0 435 116**
**US-A- 4 391 959**

**POLYMER BULLETIN, Band 6, Nr. 1/2, Dezember 1981, Heidelberg NGUYEN et al. "Initiation of Cationic Polymerizations with Alcohol/Lewis Acid Systems 1. The Reaction Between Alcohols and Boron Trichloride" Seiten 47-54**

(73) Patentinhaber: **BASF Aktiengesellschaft
Carl-Bosch-Strasse 38
D-67063 Ludwigshafen (DE)**

(72) Erfinder: **Rath, Hans Peter, Dr.
Friedhofstrasse 7
W-6718 Grünstadt (DE)**
Erfinder: **Hoffmann, Herwig, Dr.
Knietschstrasse 21
W-6710 Frankenthal (DE)**
Erfinder: **Reuter, Peter, Dr.
Holbeinstrasse 19
W-6800 Mannheim 1 (DE)**
Erfinder: **Mach, Helmut, Dr.
Kaiserstrasse 43
W-6900 Heidelberg (DE)**

**Beschreibung**

Die vorliegende Erfindung betrifft ein neues und verbessertes Verfahren zur Herstellung von Polyisobuten aus Isobuten und/oder isobutenhaltigen Kohlenwasserstoffen in Gegenwart eines Komplexes aus $BF_3$ und einem Alkohol.

Die Polymerisation von Isobuten mit Hilfe verschiedener Initiatoren, darunter Bortrifluorid, ist allgemein bekannt, z.B. aus "High Polymers", Band XXIV (J. Wiley & Sons, Inc., New York, 1971), Seite 713 ff. Je nach den ebenfalls an sich bekannten Polymerisationstechniken erhält man hierbei Produkte unterschiedlichen mittleren Polymerisationsgrades P, wobei solche Polymeren mit P = 10 bis 100 besondere Bedeutung als Zwischenprodukte für Mineralölhilfsmittel haben. Diese Polyisobutene (man müßte sie zutreffender als Oligoisobutene bezeichnen, jedoch ist dieser Begriff im Schrifttum weniger gebräuchlich) werden in sogenannten polymeranalogen Reaktionen in einer ersten Stufe chloriert, maleiniert oder hydroformyliert. In weiteren Umsetzungsschritten wird das chlorierte Polymer dehydrohalogeniert und mit Polyaminen oder Maleinsäureanhydrid umgesetzt, das Oxoprodukt mit Aminen oder $NH_3$ reduktiv aminiert und die Maleinierungsprodukte des thermischen oder chlorhaltigen Verfahrens mit Polyaminen umgesetzt. Die daraus resultierenden Polybutenamine finden überwiegend als Benzinadditive, die Polyisobutenylbernsteinsäureimide im Bereich der Schmieröladditive Verwendung.

Aus der DE-A-27 02 604 ist ein Verfahren zur Herstellung von Polyisobuten aus Isobuten unter gasförmigem $BF_3$ als Polymerisationskatalysator bekannt, das zu einem Polyisobuten führt, das 60 bis 90 % endständige und somit reaktive Doppelbindungen enthält.

Ferner ist aus EP-A-145 235 bekannt, für die Polyisobutenherstellung einen $BF_3$/$C_1$- bis $C_8$-Alkanol-Komplex einzusetzen, wobei ebenfalls 70 bis 90 % endständige Doppelbindungen im Polyisobuten erhalten werden sollen.

In dem Verfahren der DE-A-27 02 604 muß $BF_3$ gasförmig eingebracht werden und Düsengeometrie und Druckverhältnisse spielen eine wesentliche Rolle. Unbefriedigend ist insbesondere die Veränderung der Düsengeometrie durch Korrosion oder die Verstopfung der $BF_3$ Düsen. Bei Einsatz eines $BF_3$-Komplexes gemäß EP-A-145 235 kommt es auf eine gute Verteilung der unlöslichen Komplexe an, die hohe Turbulenz oder gute Rührung notwendig macht. Insbesondere die Verwendung des durch Eingasen oder in situ hergestellten $BF_3$/Alkohol-Komplexes war unbefriedigend.

In Polymer Bull. 6, 47 (1981) wird über Primärreaktionen, die zwischen Bortrichlorid und verschiedenen tertiären und einem sekundären Alkohol stattfinden, berichtet. Zum Zwecke der Isolierung der Primärprodukte und zur Vermeidung von Folgereaktionen dieser Primärprodukte wird das dem betreffenden Alkohol zugesetzte Bortrichlorid nach einer Minute Reaktionszeit durch Anlegen eines Vakuums entfernt. Während dieser Umsetzung des Bortrichlorids mit dem Alkohol ist kein Isobuten zugegen.

US-A-4 391 959 betrifft ein Verfahren zur Herstellung von Polyisobuten, das durch den Einsatz eines hochreinen, weitgehend von Siliciumtetrafluorid befreiten, Bortrifluorid-Katalysators gekennzeichnet ist. Gemäß den Beispielen wird dabei hochmolekulares Polyisobuten erhalten über dessen Gehalt an endständigen Doppelbindungen keine Aussage gemacht wird.

Der vorliegenden Erfindung lag daher die Aufgabe zugrunde, den genannten Nachteilen abzuhelfen.

Demgemäß wurde ein neues und verbessertes Verfahren zur Herstellung von Polyisobuten aus Isobuten und/oder isobutenhaltigen Kohlenwasserstoffen in Gegenwart eines Komplexes aus $BF_3$ und einem aliphatischen, linearen oder verzweigten, primären $C_1$- bis $C_{21}$-Alkohol gefunden, welches dadurch gekennzeichnet ist, daß man das freie $BF_3$ im wesentlichen aus der Komplexlösung und/oder dem Reaktionsraum entfernt.

Herstellung des $BF_3$/Alkanol-Komplexes

Der $BF_3$/Alkanol-Komplex läßt sich durch Einleiten, Eingasen oder Aufpressen von $BF_3$ in ein $C_1$- bis $C_{21}$-Alkanol oder deren Gemische bei Temperaturen von (-30) bis +20°C, vorzugsweise (-20) bis 0°C gegebenenfalls in einem inerten Lösemittel herstellen. Beim Aufpressen eignen sich Drücke von 1,2 bis 10 bar. Im allgemeinen werden 0,05 bis 14 molare, bevorzugt 0,05 bis 3 molare Komplexlösungen in einem inerten Kohlenwasserstoff verwendet. In einer bevorzugten Ausführungsform wird die Komplexlösung durch Einleiten von $BF_3$ bis zur Sättigung einer z.B. 2,0 molaren Lösung von iso-Tridekanol in Hexan hergestellt und das gelöste, nicht komplex gebundene $BF_3$-Gas durch Abziehen mittels Durchleiten eines trockenen Inertgases wie Stickstoff oder Argon oder durch Anlegen eines Vakuums (ca. 100 mbar) im wesentlichen also bis auf 0 bis 5 Gew.-%, vorzugsweise 0 bis 0,5 Gew.-% entfernt. Danach wird z.B. mit Hexan auf 0,1 molar verdünnt und Komplexbildner wie Säuren, Phenole, Wasser oder Alkohole, insbesondere $C_1$- bis $C_{21}$-Alkohole in solchen Mengen zugesetzt, daß das Molverhältnis von $BF_3$ zu Komplexbildner insgesamt zwischen 0,5 und 0,95 liegt. Der Wert ist abhängig von dem gewünschten Molekulargewicht, der Polymeri-

2

sationstemperatur und dem Isobutenumsatz und damit letztendlich auch von der Verweilzeit und liegt zwischen 0,5 und 0,95. Ein Teilumsatz ist hinsichtlich Produktqualität stets vorteilhaft. Zur Absenkung des Molverhältnisses von $BF_3$ zu Komplexbildner wird weiterer Komplexbildner benötigt. Hierbei können ein oder mehrere Komplexbildner Verwendung finden, wobei eine Absenkung des Molverhältnisses vor und/oder nach Eintritt in den Reaktor erfolgen kann. Führt man den $BF_3$-Komplex lange vor Reaktoreintritt mit weiterem Komplexbildner zusammen, wählt man aus Löslichkeitsgründen meist denselben Komplexbildner, um Abscheidungen zu vermeiden. Je stärker man sich dem Zeitpunkt des Reaktoreintrittes nähert, um so eher kann man Komplexbildner höherer Polarität einsetzen, deren Komplexe dann nicht mehr löslich sind und erst überwiegend im Reaktor monomolekular in situ erzeugt werden. Einen vergleichbaren Effekt erhält man, wenn man den zusätzlichen Komplexbildner mit einem getrennten Mengenstrom oder im Lösungsmittel im Isobuten oder isobutenhaltigen Kohlenwasserstoffen zuführt. Insbesondere die separate Zufuhr, gegebenenfalls in einem inerten Lösungsmittel, hat regelungstechnische Vorteile, weil der Reaktor schneller auf Änderungen reagiert und so Schwankungen im Komplexbildnergehalt der Zuläufe (meist Wasser und Methanol) besser kompensiert werden können.

Als Komplexbildner für die Herstellung des vorgeformten $BF_3$-Komplexes, die eine homogene Katalyse sicherstellen, sind unter den linearen, aliphatischen, primären Alkoholen, z.B. $C_9$- bis $C_{21}$-Alkanole, vor allem n-Nonanol und n-Dekanol, n-Undekanol und n-Dodekanol geeignet, bevorzugt n-Nonanol und n-Dekanol. Bei Oxoalkoholen, die wegen ihren Verzweigungen auch bei tiefen Temperaturen flüssig bzw. gelöst bleiben, sind vor allem iso-Nonanol, iso-Dekanol, iso-Tridekanol und iso-Heptadekanol geeignet. Sie sind aus den entsprechenden Propen- oder Butenoligomeren durch Hydroformylierung gut zugänglich.

Als Komplexbildner, die zur Absenkung des molaren $BF_3$-Anteils eingesetzt werden, eignen sich außer $C_1$- bis $C_{21}$-Alkanolen auch unsubstituiertes oder substituiertes Phenol, wie ortho-, meta- und para-Kresol, Wasser oder $C_1$- bis $C_8$-Carbonsäure, wie Ameisensäure, Essigsäure, Propionsäure, Pivalinsäure und Ethylhexansäure.

Unter den Alkanolen eignen sich neben Methanol, Ethanol, n-Propanol, Butanol, besonders $C_9$- bis $C_{21}$-Alkanole, bevorzugt $C_9$- bis $C_{17}$-Alkanole wie n-Nonanol, n-Dekanol, aber auch mehr oder minder verzweigte Oxoalkoholgemische wie iso-Nonanole, iso-Dekanole, iso-Tridekanole oder iso-Heptadekanole.

Diese langkettigen Alkohole werden auch zur Herstellung des vorgeformten $BF_3$-Komplexes verwendet und sind die Basis der homogenen Katalyse.

Als inerte Lösungsmittel eignen sich $C_5$- bis $C_{20}$-Alkane, bevorzugt $C_5$- bis $C_{12}$-Alkane wie n-Pentan, iso-Pentan, n-Hexan, n-Heptan, iso-Oktan und iso-Dodekan und $C_5$- bis $C_8$-Cycloalkane wie Cyclopentan, Cyclohexan, Cycloheptan und Cyclooctan.

Die Herstellung von Polyisobutenen aus Isobuten und/oder isobutenhaltigen Flüssiggasen in Gegenwart eines Komplexes aus $BF_3/C_1-C_{21}$-Alkanol kann durch Polymerisation in üblichen Reaktoren wie Rührkesseln, Rohr-, Rohrbündel und Schlaufenreaktoren diskontinuierlich, halbkontinuierlich oder kontinuierlich durchgeführt werden. Kontinuierlich sind Schlaufenreaktoren [Rohr(bündel)-reaktoren mit Rührkesselcharakteristik] bevorzugt. Besonders günstig sind dabei Rohrquerschnitte, die in Teilbereichen zu Turbulenz führen. Auch Kunststoffbeschichtungen mit Polytetrafluorethylen, Polyethylen oder Polypropylen sind vorteilhaft, da sie Korrosionsprobleme verringern.

In solchen Einrichtungen können Isobuten, isobutenhaltige Lösungsmittel oder Flüssiggase mit einem Katalysator aus einem vorgefertigten Komplex aus $BF_3$, einem $C_1$- bis $C_{21}$-Alkohol und gegebenenfalls einem inerten Lösungsmittel gemischt und über eine Kühlung die entstehende Reaktionswärme abgeführt werden. Die Komplexkonzentration der Katalysatorlösung reicht bei dem erfindungsgemäßen Verfahren zweckmäßig vom $BF_3$ gesättigten Alkohol bis zur 1 %igen Lösung in Hexan. Eine niedrige Viskosität der Komplexlösung ist bei der Herstellung ebenso vorteilhaft wie bei der Einmischung.

Die Polymerisation wird zweckmäßig isotherm bei meist gleichbleibender Monomerkonzentration durchgeführt. Dabei erhält man enge Molekulargewichtsverteilungen bis hinunter zu $M_w/M_N$ von 1,2, wobei $M_w$ und $M_N$ die in EP-A 195 910 angegebene Bedeutung haben.

Die Temperaturen der Polymerisation liegen im allgemeinen unter $0°C$, die Isobutenumsätze liegen je nach Verfahren, Verweilzeit und Katalysatormenge zweckmäßig zwischen 20 und 100 %. Die Steuerung des Isobutenumsatzes ist für die Produktqualität des Polymeren von wesentlicher Bedeutung. Nach dem Anspringen der Reaktion erreicht man den Gleichgewichtszustand in wenigen Stunden.

Die Verweilzeit kann zweckmäßig zwischen 10 Sekunden und mehreren Stunden betragen. Die Katalysatormenge kann zweckmäßig zwischen 500 und 10 000 mg $BF_3$ pro kg Isobuten betragen. Isobuten, Flüssiggase und Lösungsmittel können mit Komplexbildnern, insbesondere Wasser und Alkoholen, versetzt oder von solchen befreit werden. Insbesondere eine destillative oder adsorptive Trocknung der Zuläufe ist bevorzugt. Je höher der Komplexbildnergehalt um so höher ist auch der Katalysatorbedarf.

Die Aufarbeitung erfolgt zweckmäßig durch Abbruch mit Ammoniak oder 5 bis 50 gew.-%iger wäßriger Natronlauge, gefolgt von mehreren Wasserwäschen, und einer destillativen Aufarbeitung. Das Wertprodukt fällt z.B. als Sumpfprodukt einer Destillation bei 240°C und 1 mbar an.

Beispiele

Beispiel 1

In einem Reaktor (z.B. einem Schlaufenreaktor) werden kontinuierlich 900 ml/h eines Gemisches ($C_4$-Schnitt) aus:

| iso-Butan | 4,0 % |
|---|---|
| n-Butan | 9,2 % |
| But-1-en | 29,0 % |
| trans-But-2-en | 7,7 % |
| cis-Buten-2 | 4,5 % |
| Isobuten | 45,4 % |
| Butadien | < 50 ppm |
| mit einem Wassergehalt von ca. 2 ppm | |

und 40 ml/h einer frisch in Hexan bei -15 bis 10°C drucklos hergestellten, von überschüssigem $BF_3$ - durch 10minütige Behandlung bei 100 mbar; 20°C - weitgehend befreiten 0,1 molaren $BF_3$/iso-Tridekanol-Katalysator-Lösung unter Eigendruck umgesetzt. Der Reaktionsaustrag wird anschließend mit 10 gew.-%iger Natronlauge neutralisiert, wobei nicht eingesetztes Isobuten und andere Kohlenwasserstoffe (Flüssiggase) entweichen. Nach Aufnahme in Hexan und waschen mit Wasser werden die Leichtsieder bei maximal 230°C/1 mbar entfernt.

Die Ergebnisse sind in Tabelle 1 zusammengestellt.

Beispiel 2

Die Umsetzung erfolgt analog Beispiel 1, jedoch wird der entgaste Komplex nach 48-stündiger Lagerung eingesetzt.

Die Ergebnisse sind in der Tabelle 1 zusammengestellt.

Beispiel 3

Die Umsetzung erfolgt analog Beispiel 2, jedoch wird eine erneute Entgasung wie in Beispiel 1 durchgeführt, bevor dieser Komplex eingesetzt wird.

Die Ergebnisse sind in der Tabelle 1 zusammengestellt.

Beispiel 4

Die Umsetzung erfolgt analog Beispiel 1, jedoch wird die Entgasung der Komplexlösung durch Abtreiben mit Stickstoff erreicht. Dazu wird die Komplexlösung unter Durchleiten von Stickstoff durch eine Fritte ca. 30 Minuten kräftig gerührt. Danach wird die Katalysatorlösung sofort in die Polymerisation eingesetzt.

Die Ergebnisse sind in Tabelle 1 zusammengestellt.

Beispiel 5

Ein Komplex aus wasserfreiem Methanol und $BF_3$ wird durch Einleiten von gasförmigem $BF_3$ in Methanol bei -15°C hergestellt. Dieser wird 10 Minuten bei 100 bar nachbehandelt und das Molverhältnis $BF_3$ zu Komplexbildner auf 0,9:1 durch Zugabe von Wasser abgesenkt. Die so hergestellte Komplexlösung wird in die Polymerisationsreaktion analog Beispiel 1 eingesetzt.

Die Ergebnisse sind in Tabelle 1 zusammengestellt.

Beispiel 6

Eine 2 molare Lösung von iso-Nonanol in Hexan wird mit BF$_3$ bei 10°C gesättigt. Anschließend senkt man das Molverhältnis BF$_3$ zum Komplexbildner durch Zugabe von iso-Nonanol von 1:1 auf 0,8:1 ab und entgast 10 Minuten bei 100 bar und 20°C. Die so erhaltene Lösung wird unmittelbar nach der Entgasung in die Polymerisation analog Beispiel 1 eingesetzt.

Die Ergebnisse sind in der Tabelle 1 zusammengestellt.

Beispiel 7

Eine 2 molare Lösung von iso-Tridekanol in Hexan wird mit BF$_3$ bei 10°C gesättigt und mit Methanol auf ein Molverhältnis von BF$_3$ zum Komplexbildner von 0,9:1 eingestellt und zur Polymerisation als Katalysator analog Beispiel 1 eingesetzt.

Die Ergebnisse sind in Tabelle 1 zusammengestellt.

Beispiel 8

Eine 2 molare Lösung von iso-Tridekanol in Hexan wird mit BF$_3$ bei 10°C gesättigt und mit iso-Tridekanol auf ein Molverhältnis von 0,75:1 gestellt, mit Methanol auf einen Wert von 0,8:1 abgesenkt und ohne weitere Behandlung in die Polymerisation eingesetzt.

Die Ergebnisse sind in der Tabelle 1 zusammengestellt.

Vergleichsbeispiel A (gemäßEP -A-145 235, Beispiel 1)

Ein bei -15°C gesättigter Ethanol/BF$_3$-Komplex wird mit trockenem Methylenchlorid 0,1 molar eingestellt. Diese Lösung wird ohne weitere Behandlung als Katalysator für die Polymerisation gemäß Beispiel 1 verwendet. Der C$_4$-Schnitt wird über Molsieb 0,3 nm auf einen def. Wassergehalt von 2 ppm gestellt.

Die Ergebnisse sind in der Tabelle 1 zusammengestellt.

Vergleichsbeispiel B (gemäß EP-A-145 235)

Eine 0,1 molare Lösung von iso-Tridekanol in Hexan wird bei -15°C mit BF$_3$ gesättigt, die ohne weitere Behandlung zur Polymerisation gemäß Beispiel A eingesetzt wird.

Die Ergebnisse sind in Tabelle 1 zusammengestellt.

Tabelle 1

Polymerisationsversuche von Isobuten mit unterschiedlich präparierten BF$_3$/Alkoholkomplexen

| Beispiel (Zahl) bzw. Vergl.-Versuch (Buchstabe) | BF$_3$/Isobuten [mg/kg] | Molverhältnis BF$_3$/Komplexbildner | Reaktortemperatur [°C] | Umsatz [%] | Polymerausbeute [%] | Molekulargewicht Mn | endständige Doppelbindungen [%] |
|---|---|---|---|---|---|---|---|
| A | 2000 | 1,10 | -9 | 98 | 49 | 1750 | 25 |
| B | 800 | 1,20 | -12 | 78 | 99 | 2300 | 34 |
| 1 | 2000 | 1,00 | -10 | 85 | 96 | 1210 | 52 |
| 2 | 2500 | 1,00 | -10 | 86 | 97 | 1360 | 47 |
| 3 | 2500 | 0,98 | -12 | 79 | 95 | 1170 | 55 |
| 4 | 2000 | 1,00 | -10 | 90 | 96 | 1380 | 49 |
| 5 | 5000 | 0,90 | -12 | 82 | 89 | 930 | 79 |
| 6 | 4000 | 0,80 | -13 | 73 | 90 | 1050 | 65 |
| 7 | 4000 | 0,95 | -13 | 76 | 89 | 1130 | 71 |
| 8 | 4000 | 0,90 | -13 | 69 | 87 | 970 | 76 |

**Patentansprüche**

1. Verfahren zur Herstellung von Polyisobuten aus Isobuten und/oder isobutenhaltigen Kohlenwasserstoffen in Gegenwart eines Komplexes aus $BF_3$ und einem aliphatischen, linearen oder verzweigten, primären $C_1$- bis $C_{21}$-Alkohol, dadurch gekennzeichnet, daß man das freie $BF_3$ im wesentlichen aus der Komplexlösung und/oder dem Reaktionsraum entfernt.

2. Verfahren nach Anspruch 1, dadurch gekennzeichnet, daß man das freie $BF_3$ durch Abziehen mittels Durchleiten eines trokkenen Inertgases oder durch Anlegen eines Vakuums oder mit Komplexbildnern entfernt.

3. Verfahren nach Anspruch 1, dadurch gekennzeichnet, daß im Komplex $BF_3$ zum Alkohol und/oder zusätzlichen Komplexbildnern ein Molverhältnis von 0,5:1 bis 0,95:1 vorliegt.

**Claims**

1. A process for preparing polyisobutene from isobutene and/or isobutene-containing hydrocarbons in the presence of a complex comprising $BF_3$ and an aliphatic, linear or branched, primary $C_1$-$C_{21}$ alcohol, which comprises essentially removing the free $BF_3$ from the complex solution and/or from the reaction chamber.

2. The process as claimed in claim 1, wherein the free $BF_3$ is removed by stripping, by passing a dry inert gas through the reaction chamber or by applying a vacuum or using complexing agents.

3. The process as claimed in claim 1, wherein the molar ratio of $BF_3$ to the alcohol and/or additional complexing agents in the complex is from 0.5:1 to 0.95:1.

**Revendications**

1. Procédé de fabrication du polyisobutène à partir de l'isobutène et/ou d'hydrocarbures contenant de l'isobutène, en présence d'un complexe du $BF_3$ et d'un alcool en $C_1$ à $C_{21}$, primaire, aliphatique, linéaire ou ramifié, caractérisé en ce que l'on élimine sensiblement le $BF_3$ libre de la solution du complexe et/ou de l'espace réactionnel.

2. Procédé suivant la revendication 1, caractérisé en ce que l'on élimine le $BF_3$ libre par entraînement par passage forcé d'un gaz inerte sec, ou par la réalisation d'un vide, ou à l'aide d'agents de complexation.

3. Procédé suivant la revendication 1, caractérisé en ce que le complexe de $BF_3$ est présent en un rapport molaire de 0,5:1 à 0,95:1 par rapport à l'alcool et/ou aux agents de complexation supplémentaires.